# EUROPEAN PATENT APPLICATION

(11) **EP 3 306 120 A1**
(43) Date of publication of application: **11.04.2018**
(21) Application number: 16803242.3
(22) Date of filing: 27.05.2016
(51) Int. Cl.: F16C 9/04, F16C 17/02, F16C 33/10, F16C 33/14, F16C 33/20

(54) **BEARING FOR INTERNAL COMBUSTION ENGINE AND PRODUCTION METHOD FOR BEARING FOR INTERNAL COMBUSTION ENGINE**

(30) Priority: 29.05.2015 JP 2015110790
(71) Applicant: Taiho Kogyo Co., Ltd, Toyota-shi Aichi 471-8502 (JP)
(72) Inventor: UEDA, Tatehito, Toyota-shi Aichi 471-8502 (JP)
(74) Representative: Bandpay & Greuter
(86) International application number: PCT/JP2016/065705
(87) International publication number: WO 2016/194807

(57) **Abstract**

A semicircular tube-shaped bearing (11) has a bearing main body 111 that is formed from a resin, has a semicircular tube shape, and has an inner circumferential surface (112) that slides over an opposing shaft and an outer circumferential surface (113) that comes into contact with a housing. The semicircular tube-shaped bearing (11) may have a structure in which multiple resin layers are laminated in a direction of radiation from the axial center. In this case, the bearing main body (111) has a first layer (1111) that includes the outer circumferential surface (113) and a second layer (1112) that includes the inner circumferential surface (112). The first layer (1111) is formed from a thermosetting resin. The first layer (1111) may include fiber reinforced resin in which fibers are mixed with a thermosetting resin. The second layer (1112) is formed from a thermoplastic resin. The second layer (1112) may include fiber reinforced resin in which fibers are mixed with a thermoplastic resin.

## Description

### Technical Field

The present invention relates to a bearing for use in an internal combustion engine of an automobile or the like.

### Background Art

A bearing that employs bimetal, which has a lining layer made of a copper-based or an aluminum-based bearing alloy on a metal backing made of steel or the like, is known as a so-called main bearing or connecting rod bearing used in an internal combustion engine (engine) of an automobile or the like (e.g., see Patent Document 1). Also, although not for use in an internal combustion engine, a bearing made of resin is known as a bearing for use in office equipment or the like (e.g., see Patent Document 2 and 3).

### Citation List

### Patent Document

Patent Document 1: JP 2013-167280A
Patent Document 2: JP 2008-19880A
Patent Document 3: JP 2000-87954A

### Summary

### Technical Problem

One characteristic that is desired for an internal combustion engine in an automobile is an increase in the speed of rise in lubricant temperature during cold starting, or in other words an improvement in the so-called warm-up characteristic. However, when using a bearing made of metal as described in Patent Document 1, heat escapes from the lubricant via the bearing due to the relatively high thermal conductivity thereof, and there has been a problem in that the temperature of the lubricant does not rise easily. The bearings described in Patent Document 2 and 3 are used in a non-lubricated environment such as in office equipment, and have had the problem of not being able to be used as bearings for an internal combustion engine that are used along with a lubricant.

In view of this, the present invention relates to technology for improving mainly the warm-up characteristic with a bearing for an internal combustion engine.

### Solution to Problem

The present invention provides an internal combustion engine bearing including: a bearing main body that is formed from a resin, has a semicircular tube shape, and has an inner circumferential surface that is to slide over an opposing shaft and an outer circumferential surface that is to come into contact with a housing.

The bearing main body may include a layer formed from a thermosetting resin.

The bearing main body may include a layer formed from a thermoplastic resin.

The bearing main body may include a layer formed from a fiber reinforced resin.

This internal combustion engine bearing may have a first layer that is formed from a thermosetting resin and includes the outer circumferential surface; and a second layer that is formed from a thermoplastic resin and includes the inner circumferential surface.

A thickness of the first layer may be greater than or equal to 80% of a thickness of the bearing main body.

The bearing main body may have an oil passage between the first layer and the second layer.

The present invention also provides a method of manufacturing an internal combustion engine bearing, including: producing a slurry by stirring a material that contains a resin in water; dehydrating the produced slurry; and molding the dehydrated slurry by applying pressure and heat in a mold.

The present invention also provides a method of manufacturing an internal combustion engine bearing, including: forming a first layer from a thermosetting resin; and forming a second layer by coating the first layer with a thermoplastic resin.

The present invention also provides a method of manufacturing an internal combustion engine bearing, including: forming a first layer by injecting a thermosetting resin into a first mold; arranging the formed first layer into a second mold; and forming a second layer by injecting a thermoplastic resin into the second mold in which the first layer is arranged.

The present invention also provides a method of manufacturing an internal combustion engine bearing, including: forming a first layer by injecting a thermosetting resin into a portion of an interior space of a mold; and forming a second layer by injecting a thermoplastic resin between the mold and the first layer.

The present invention also provides a method of manufacturing an internal combustion engine bearing, including: forming a first layer by using a first male mold to press a thermosetting resin powder or granules arranged in a female mold; and forming a second layer by using a second male mold to press a thermoplastic resin powder or granules arranged so as to be overlaid on the first layer formed in the female mold.

### Advantageous Effects

According to the present invention, it is possible to improve the warm-up characteristic with a bearing for an internal combustion engine. Also, it is possible to improve the mechanical strength compared to the case where the internal combustion engine bearing is entirely made of a thermoplastic resin, and it is possible to improve the sliding characteristic of the sliding surface that slides over the shaft in comparison with the case where the bearing is entirely made of a thermosetting resin.

### Brief Description of Drawings

FIG. 1 is a diagram illustrating crankshaft 1 in an internal combustion engine.
FIG. 2 is a diagram illustrating an external view of main bearing 10.
FIG. 3 is a diagram illustrating an external view of semicircular tube-shaped bearing 11.
FIG. 4 is a diagram illustrating a cross-sectional structure of semicircular tube-shaped bearing 11.
FIG. 5 is a diagram illustrating a crush relief.
FIG. 6 is a diagram illustrating a cross-sectional structure of oil groove 116 and oil hole 117.
FIG. 7 is a diagram illustrating fine grooves 118 formed in inner circumferential surface 112.
FIG. 8 is a conceptual diagram for describing a laminated structure of a semicircular tube-shaped bearing.
FIG. 9 is a diagram showing an external view of a bearing main body that has an oil passage between a first layer and a second layer.
FIG. 10 is a cross-sectional diagram in which the bearing main body is cut along line X-X in FIG. 9.
FIG. 11 is a cross-sectional diagram in which the bearing main body is cut along line XI-XI in FIG. 10.
FIG. 12 is a flowchart showing a bearing manufacturing method according to a second example.
FIG. 13 is a diagram illustrating manufacturing steps according to the second example.
FIG. 14 is a flowchart showing a method of molding resin by sheet forming.
FIG. 15 is a flowchart showing a method of molding a bearing that has a laminated structure.
FIG. 16 is a flowchart showing a bearing manufacturing method according to a third example.
FIG. 17 is a diagram illustrating manufacturing steps according to the third example.

### Reference Signs List

1 ... Crankshaft
2 ... Connecting rod
10 ... Main bearing
   11 ... Semicircular tube-shaped bearing
      111 ... Bearing main body
         1111 ... First layer
         1112 ... Second layer
      112 ... Inner circumferential surface
      113 ... Outer circumferential surface
      114 ... Mating surface
      115 ... Mating surface
      116 ... Oil groove
      116a ... Oil passage
      117 ... Oil hole
      117a ... Oil hole
      117b ... Oil hole
      118 ... Fine groove
      119 ... Claw
   12 ... Semicircular tube-shaped bearing
20 ... Connecting rod bearing
30 ... Crank washer

### Description of Embodiments

### 1. Structure

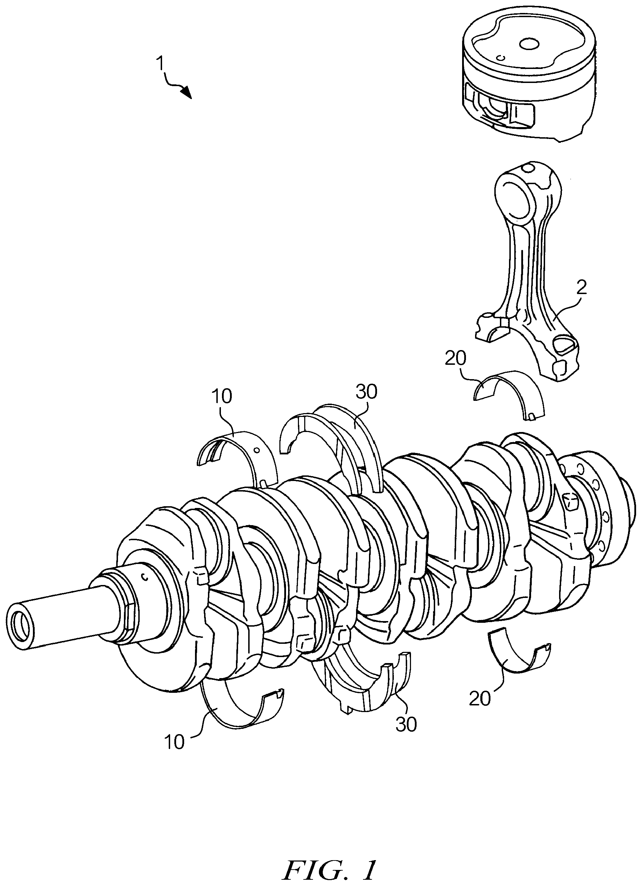

FIG. 1 is a diagram illustrating crankshaft 1 in an internal combustion engine. Crankshaft 1 includes main bearing 10, connecting rod bearing 20, and crank washer 30. Main bearing 10 is a bearing that is attached to the housing (not shown) of a cylinder block (not shown), grips a journal of crankshaft 1, and supports crankshaft 1. Connecting rod bearing 20 is a bearing that is attached to connecting rod 2, grips a pin of crankshaft 1, and supports connecting rod 2. Crank washer 30 is a bearing that is used in combination with main bearing 10 and supports force in the axial direction of crankshaft 1. Crank washer 30 also has a function of positioning crankshaft 1 and the cylinder block in the axial direction.

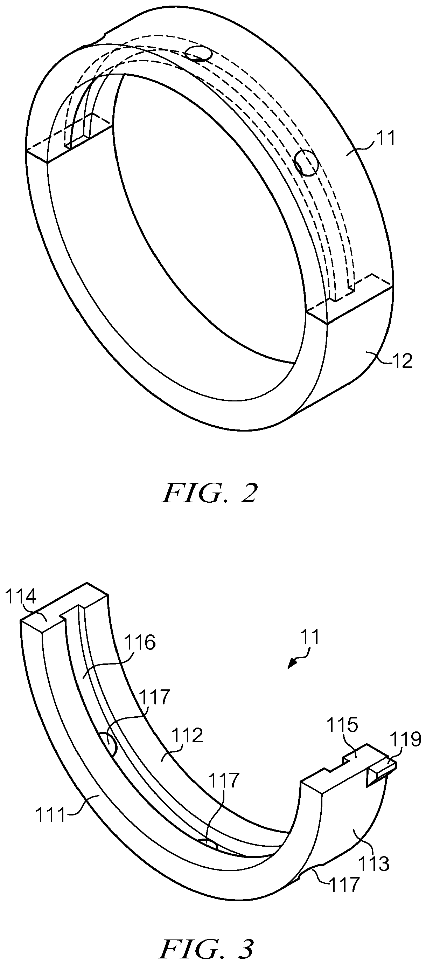

FIG. 2 is a diagram illustrating an external view of main bearing 10. Main bearing 10 is constituted by two semicircular tube-shaped bearings (semicircular tube-shaped bearing 11 and semicircular tube-shaped bearing 12). Semicircular tube-shaped bearing 11 is a bearing (upper bearing) that is attached on the piston side in a view from crankshaft 1, and semicircular tube-shaped bearing 12 is a bearing (lower bearing) that is attached on the opposite side. Semicircular tube-shaped bearing 11 and semicircular tube-shaped bearing 12 are examples of an internal combustion engine bearing according to the present invention.

FIG. 3 is a diagram illustrating an external view of semicircular tube-shaped bearing 11. Semicircular tube-shaped bearing 11 has bearing main body 111. In this example, bearing main body 111 is entirely made of a resin. A thermosetting resin or a thermoplastic resin is used as the resin.

Examples of the thermosetting resin include thermosetting polyimide resin (PI), phenol resin (PF), urea resin (UF), melamine resin (MF), epoxy resin (EP), furan resin (FF), xylene resin (XF), alkyd resin (UP), silicone resin (SI), allyl resin (PDAP), and a material obtained by mixing fibers (glass fibers or carbon fibers) in these types of resin (so-called fiber-reinforced plastic (fiber reinforced resin), FRP).

Examples of the thermoplastic resin include polyvinyl chloride resin (PVC), polyvinylidene chloride resin (PVdC), polyvinyl alcohol resin (PVA), polystyrene resin (PS), acrylonitrile styrene resin (AS), acrylonitrile-butadiene-styrene resin (ABS), polyethylene resin (PE), ethylene vinyl acetate copolymer resin (EVA), polypropylene resin (PP), polyacetal resin (POM), polymethylmethacrylate resin (PMMA), modified acrylic resin (MS), cellulose acetate resin (CA), polycarbonate resin (PC), polyester resin (PET, PTT, PBT, PEN, PBN), polyamide resin (PA), polyurethane resin (PU), fluoric resin (PTFE, FEP, PFA, etc.), polyamide-imide resin (PAI), polyphenylene sulfide (PPS), polyetheretherketone (PEEK), thermoplastic polyimide (TPI), polybenzimidazole (PBI), polyetherimide resin (PEI), polysulfone resin (PSF), polyethersulfone resin (PES), and polyarylate resin (PAR).

Due to being used in an internal combustion engine, the heat resistant temperature (e.g., continuous use temperature) of the resin is preferable greater than or equal to 180°C, and more preferably greater than or equal to 200°C. Also, from the viewpoint of improving the warm-up characteristic, the thermal conductivity of the resin is preferably less than or equal to 1 W/mK, and more preferably less than or equal to 0.5 W/mK. Also, in order to avoid adverse effects caused by moisture absorption, such as change in dimensions, the moisture absorption of the resin is preferably less than or equal to 0.2%. In the case of thermoplastic resin in particular, there is a problem that the glass transition point decreases due to moisture absorption, and therefore the moisture absorption is preferably less than or equal to 0.2%. Furthermore, from the viewpoint of suppressing expansion in the cylinder block, the coefficient of linear expansion of the resin is preferably less than or equal to 70×10⁻⁶.

Bearing main body 111 is entirely made of a resin, and therefore compared to the case where the bearing main body is made of a metal, heat less easily escapes from the lubricant to the housing via the bearing, and it is possible to improve the speed of rise in the lubricant temperature when the engine is cold started.

Bearing main body 111 is molded with a semicircular tube shape, and has inner circumferential surface 112 (sliding surface) that slides over crankshaft 1, and outer circumferential surface 113 that is in contact with the housing (not shown). The diameter ϕ of crankshaft 1 is 30 to 150 mm for example, and bearing main body 111 has an inner diameter that conforms to the diameter of crankshaft 1. Furthermore, bearing main body 111 has mating surface 114 and mating surface 115 that are in contact with semicircular tube-shaped bearing 12.

In this example, semicircular tube-shaped bearing 11 has oil groove 116 in inner circumferential surface 112. Oil groove 116 is a groove for supplying lubricant to the sliding surface and also holding supplied lubricant. Also, oil groove 116 is provided with at least one oil hole 117 that penetrates from outer circumferential surface 113 to inner circumferential surface 112. A portion of crankshaft 1 that is supported by semicircular tube-shaped bearing 11 is provided with an oil hole (not shown) at a position opposing oil groove 116. This oil hole penetrates to a portion of crankshaft 1 that is supported by connecting rod bearing 20. Lubricant is supplied to outer circumferential surface 113 of semicircular tube-shaped bearing 11 via an oil passage (not shown) that is provided in the cylinder block. Lubricant that has been supplied to outer circumferential surface 113 is supplied to inner circumferential surface 112 (sliding surface) via oil hole 117, and lubricates the main bearing. The lubricant on the sliding surface is supplied to the sliding surface of connecting rod bearing 20 via the oil hole of crankshaft 1.

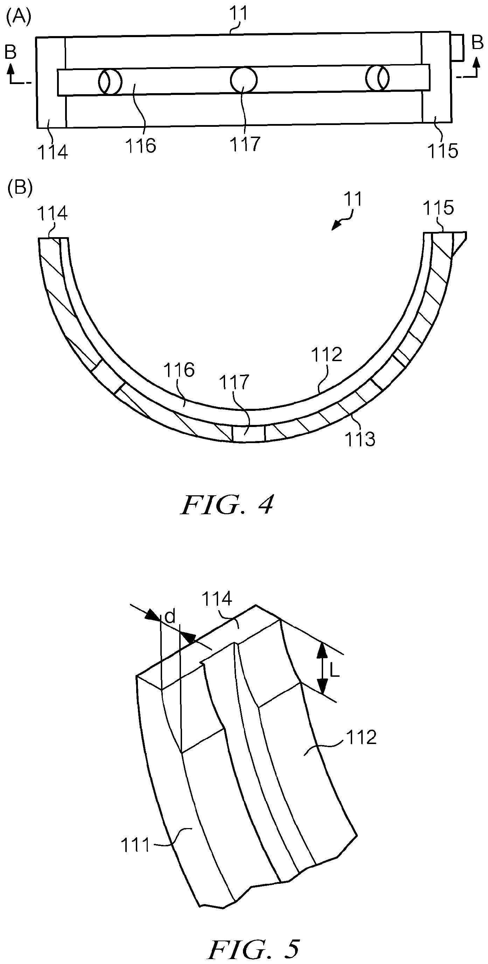

FIG. 4 is a diagram illustrating the cross-sectional structure of semicircular tube-shaped bearing 11. FIG. 4(A) is an external view of semicircular tube-shaped bearing 11 seen from a direction perpendicular to the mating surfaces. FIG. 4(B) is a cross-sectional view taken along B-B in FIG. 4(A). This cross-section is a cross-section that is perpendicular to the axial direction (a cross-section that is parallel to the sliding direction). In this example, in this cross-section, the wall thickness of bearing main body 111 is not uniform, but rather increases in thickness toward the central portion, and decreases in thickness from the central portion toward the end portions (mating surfaces). This configuration is employed such that the center of the inner diameter circle (circle described by inner circumferential surface 112) is eccentric (shifted) outward from the center of the outer diameter circle (circle described by outer circumferential surface 113). A so-called oil relief is formed by this eccentricity. Oil relief refers to the gap between the inner circumferential surface and a circle based on the central portion of the inner circumferential surface of the semicircular tube-shaped bearing (a circle that passes through the central portion of the inner circumferential surface). The depth (amount) of the oil relief is measured based on a predetermined height (e.g., 6 to 13 mm) from the mating surfaces, and is 0.005 to 0.025 mm for example. The oil relief expands the oil clearance in the vicinity of the mating surfaces, and aids the formation of wedge film pressure. Also, the oil relief furthermore aids the formation of an oil film, and cools the bearing by increasing the amount of oil.

Also, in this example, oil groove 116 is formed so as to extend the entire length in the sliding direction, from mating surface 114 to mating surface 115. The depth of the oil groove is also not uniform, but rather increases in depth toward the central portion of bearing main body 111, and decreases in depth from the central portion toward the mating surfaces.

Furthermore, bearing main body 111 is provided with a crush relief. Crush relief refers to a "relief' provided over the entire width of bearing main body 111 in portions of inner circumferential surface 112 that are adjacent to mating surface 114 and mating surface 115.

FIG. 5 is a diagram illustrating a crush relief. Note that in order to facilitate the description, the crush relief is illustrated in an exaggerated manner compared to an actual crush relief. Depth d of the crush relief is the difference between the position of inner circumferential surface 112 and a circle described by the portion of inner circumferential surface 112 other than the crush relief at the position of the mating surface, and length L of the crush relief is the length of the portion of inner circumferential surface 112 in which the crush relief is formed. Depth d of the crush relief is 0.01 to 0.06 mm for example, and length L of the crush relief is 4 to 9.5 mm for example. When the bearing is attached to the housing, even if a portion of inner circumferential surface 112 in the vicinity of a mating surface falls slightly toward the opposing shaft, the crush relief prevents contact with the shaft. The crush relief also has an effect of cooling the bearing by discharging lubricant in the vicinity of the mating surfaces, and an effect of discharging foreign matter that has penetrated to the sliding surface.

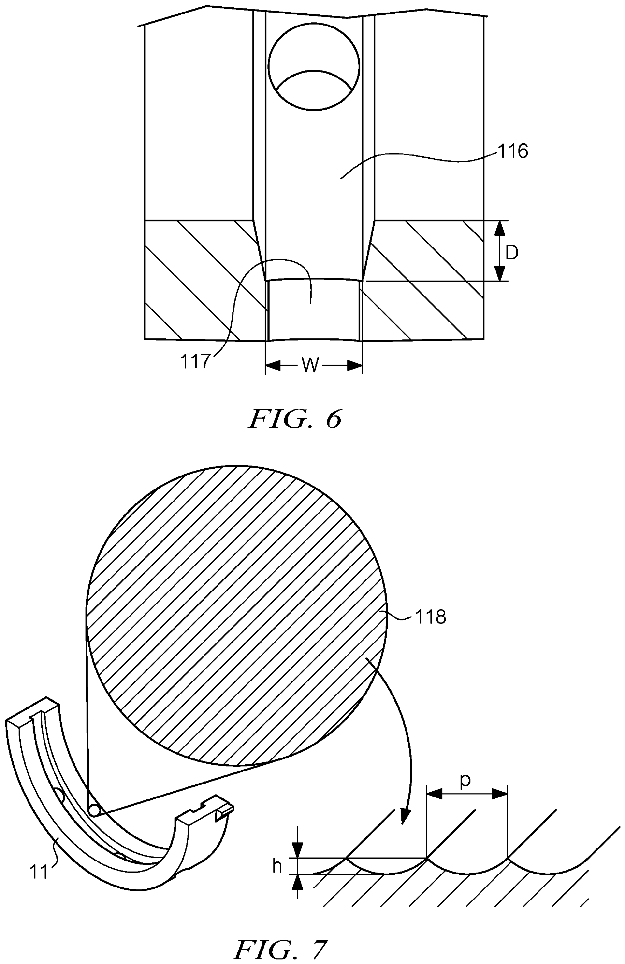

FIG. 6 is a diagram illustrating the cross-sectional structure of oil groove 116 and oil hole 117. FIG. 6 shows a cross-section that is perpendicular to the sliding direction (a cross-section that is parallel to the axial direction). In this cross-section, oil groove 116 has a trapezoid shape in which the bottom portion is narrower and the opening portion is wider. Bottom width W of oil groove 116 is 2 to 5 mm for example, and depth d of oil groove 116 is smaller than bottom width W, such as 0.5 to 1 mm.

In this example, fine grooves (microgrooves) that are finer than oil groove 116 are formed in a portion of inner circumferential surface 112 other than oil groove 116.

FIG. 7 is a diagram illustrating fine grooves 118 formed in inner circumferential surface 112. Fine grooves 118 are grooves that have a circular arc-shaped cross-section and are arranged regularly. In this example, the apex between two adjacent grooves has a sharp shape rather than being flat. The gap between two adjacent apexes is referred to as pitch P, and the depth of the grooves based on the apex is referred to as depth h. Pitch P of fine grooves 118 is larger than depth h thereof. Depth h is preferably 1 to 20 µm, and more preferably 1 to 6 µm, for example. Pitch P is preferably 0.1 to 0.4 mm, and more preferably 0.1 to 0.2 mm, for example. Fine grooves 118 shorten the time required to move from a non-lubrication state to a fluid lubrication state in a so-called Stribeck chart, thus ensuring early arrival of the fluid lubrication state and improving conformability and oil retainability.

Also, bearing main body 111 has interference (so-called crush). In other words, bearing main body 111 has a longer diameter than a semicircle.

The description will now return to FIG. 3. Semicircular tube-shaped bearing 11 has claw 119 on outer circumferential surface 113. Claw 119 is an example of a rotation prevention protrusion portion for suppressing rotation of semicircular tube-shaped bearing 11 relative to the housing. Furthermore, claw 119 has functions of preventing erroneous attachment and performing positioning in the circumferential direction and the axial direction.

Also, semicircular tube-shaped bearing 11 has so-called bulge. Bulge refers to setting the outer diameter dimension larger than the inner diameter of the housing in the free state (not attached to the housing) in a view from the axial direction. This bulge is 0.8 to 1.3 mm for example. Bulge has an effect of allowing the outer circumference of semicircular tube-shaped bearing 11 to conform to the inner circumference of the housing during attaching, and has an effect of preventing semicircular tube-shaped bearing 11 from moving away from or falling out of the housing during attachment.

A detailed description will not be given for semicircular tube-shaped bearing 12, which is the same as semicircular tube-shaped bearing 11 with the exception of not having an oil groove or an oil hole. A detailed description will not be given for connecting rod bearing 20 either, which is the same as main bearing 10 in that two semicircular tube-shaped bearings are used in a combined state. It should be noted that in connecting rod bearing 20, neither of the semicircular tube-shaped bearings has an oil groove or an oil hole. The two semicircular tube-shaped bearings of connecting rod bearing 20 are other examples of an internal combustion engine bearing according to the present invention.

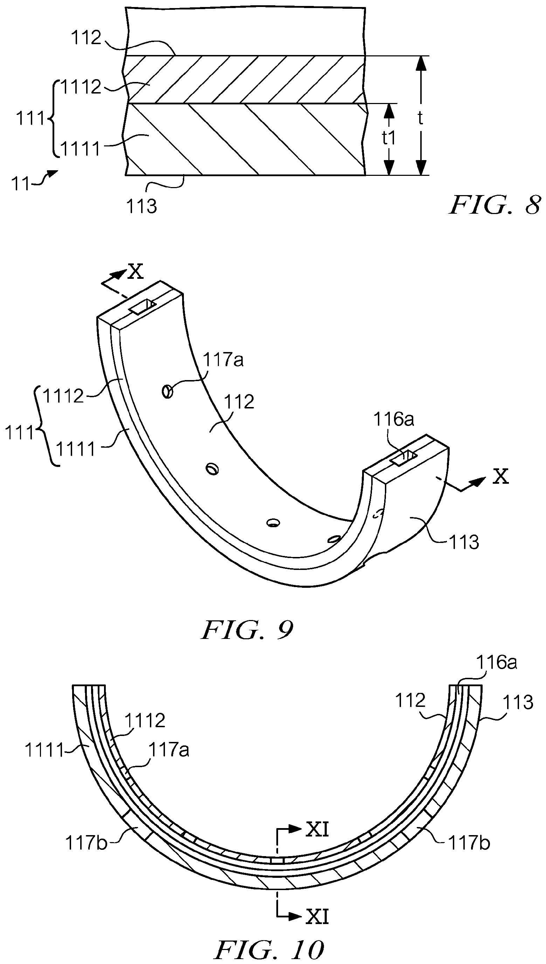

Also, semicircular tube-shaped bearing 11 and semicircular tube-shaped bearing 12 may have a structure in which multiple resin layers are laminated in a direction of radiation from the axial center. FIG. 8 is a conceptual diagram for describing the laminated structure of semicircular tube-shaped bearing 11. Oil groove 116 and oil hole 117 are not shown in FIG. 8. Note that the laminated structure of semicircular tube-shaped bearing 11 shown in FIG. 8 applies to semicircular tube-shaped bearing 12 as well.

As shown in FIG. 8, bearing main body 111 has first layer 1111 that includes outer circumferential surface 113, and second layer 1112 that includes inner circumferential surface 112. First layer 1111 is formed from any of the above-described thermosetting resins. Also, first layer 1111 may include fiber reinforced resin in which fibers are mixed with any of the above-described thermosetting resins. Second layer 1112 is formed from any of the above-described thermoplastic resins. Also, second layer 1112 may include fiber reinforced resin in which fibers are mixed with any of the above-described thermoplastic resins.

Note that thickness t1 of first layer 1111 is desirably greater than or equal to 80% of thickness t of bearing main body 111. Accordingly, there is an improved possibility that bearing main body 111 withstands load received from crankshaft 1 or the like. Also, instead of a two-layer structure including first layer 1111 and second layer 1112, bearing main body 111 may include three or more resin layers that are laminated.

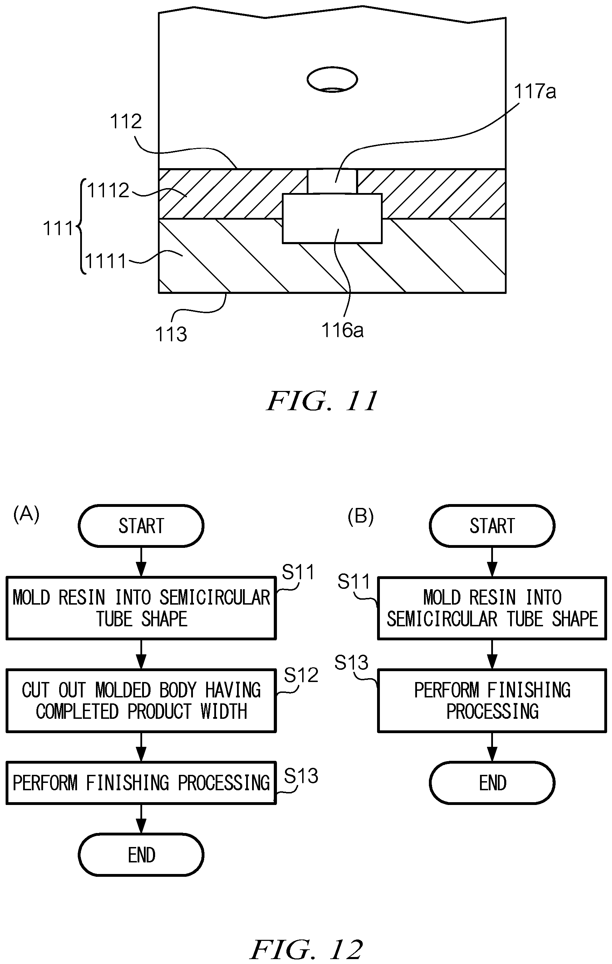

Also, bearing main body 111 may have oil passage 116a between layers. FIG. 9 is a diagram showing an external view of bearing main body 111 that has oil passage 116a between first layer 1111 and second layer 1112. FIG. 10 is a cross-sectional diagram in which bearing main body 111 is cut along line X-X in FIG. 9. FIG. 11 is a cross-sectional diagram in which bearing main body 111 is cut along line XI-XI in FIG. 10.

As shown in FIG. 10, bearing main body 111 has a structure in which first layer 1111 and second layer 1112 are laminated, and oil passage 116a is provided between first layer 1111 and second layer 1112 in the center in the width direction (the extending direction of crankshaft 1 instructed by bearing main body 111). This oil passage 116a is provided with one or more oil holes 117b that penetrate from outer circumferential surface 113 to first layer 1111. Also, one or more oil holes 117a are formed penetrating from oil passage 116a to second layer 1112 toward inner circumferential surface 112.

Accordingly, lubricant supplied from an oil passage (not shown) provided in the cylinder block passes through oil holes 117b from outer circumferential surface 113 side, fills oil passage 116a, and then passes through oil holes 117a and reaches inner circumferential surface 112. Accordingly, sliding surfaces of crankshaft 1 and bearing main body 111 (inner circumferential surface 112) slide over each other.

Note that the positions of oil holes 117a and oil holes 117b may match, but are not required to match, as shown in FIG. 11 for example. As shown in FIG. 1, even if oil holes 117b are not provided on extension lines of oil holes 117a, lubricant supplied from oil holes 117b passes through oil passage 116a and oil holes 117a, and is supplied to inner circumferential surface 112.

### 2. Manufacturing method

Several methods can be applied as methods for manufacturing main bearing 10 and connecting rod bearing 20.

### 2-1. First example

In this example, bearings are molded one at a time by injection molding, compression molding, or the like. The oil groove, oil holes, and fine grooves may be molded by forming an oil groove, oil holes, and fine grooves in the mold in advance, or may be formed by performing cutting or the like after molding into the semicircular tube shape.

### 2-2. Second example

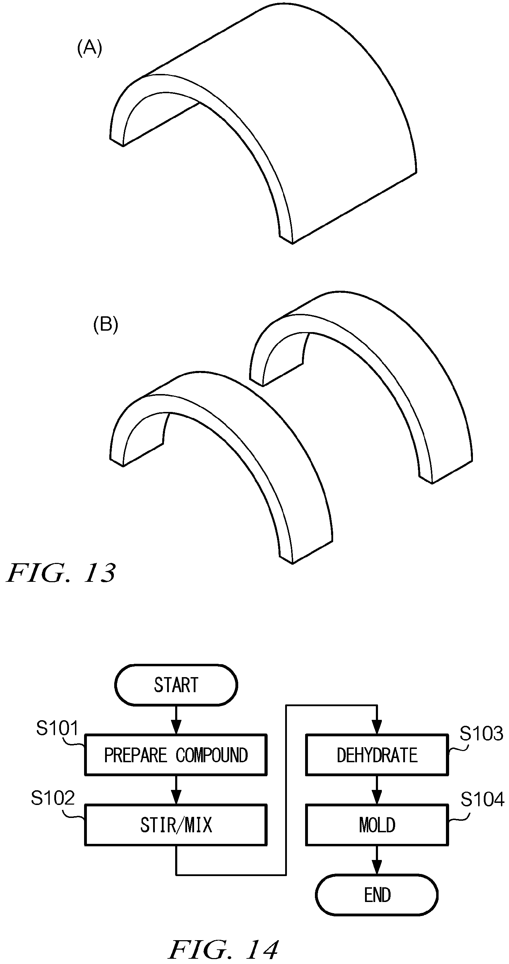

FIG. 12 is a flowchart showing a bearing manufacturing method according to a second example, and FIG. 13 is a diagram illustrating manufacturing steps.

In step S11 shown in FIG. 12(A), resin is molded into a semicircular tube shape. FIG. 13(A) illustrates a resin molded body that is obtained in step S11. The semicircular tube shape referred to here is a shape in which the length in the axial direction is longer than the width of the completed bearing. This molding is performed by injection molding, compression molding, or the like.

In step S12 in FIG. 12(A), molded bodies having the width of the completed bearing are cut from the resin molded body. FIG. 13(B) illustrates the cut molded bodies.

In step S13 shown in FIG. 12(A), necessary finishing processing and the like are carried out on the molded bodies. The finishing processing referred to here includes oil groove formation, oil hole formation, fine groove formation, and chamfering, for example.

Note that if resin is molded into a semicircular tube shape with the width of the completed bearing in step S11, step S12 shown in FIG. 12(A) may be omitted. The flowchart shown in FIG. 12(B) shows the bearing manufacturing method in this case. Here, in the case of performing resin injection molding for example, if a mold with an interior space designed with the size of the completed bearing is used, the cutting performed after molding may be omitted.

Also, besides injection molding and compression molding, the molding in step S11 may be sheet forming. Here, "sheet forming" is a solid member manufacturing method that has a step in which a material containing resin is stirred in water to produce a slurry, a step in which the produced slurry is dehydrated, and a step in which the dehydrated slurry is molded by being pressed and heated in a mold.

FIG. 14 is a flowchart showing a method of molding resin by sheet forming. In step S101 shown in FIG. 14, a material containing resin is prepared as a compound. This material contains a thermosetting resin or a thermoplastic resin, as well as glass fibers, carbon fibers, inorganic fibers, an inorganic filler, a friction adjusting material, or the like.

In step S102, the above-described material is introduced into water and stirred or mixed to produce a slurry.

In step S103, the above-described slurry is supplied to a filter and dehydrated. Suction filtration, pressure filtration, or the like is applied as dehydration.

In step S104, the above-described dehydrated slurry is supplied to a mold and then pressed and heated, thus being molded into a predetermined shape, such as a semicircular tube shape.

When the resin molded body is molded by the sheet forming steps of step S101 to step S104 shown in FIG. 14, the material is more readily distributed evenly than in the case where another process is applied. Also, in the case where the material contains fibers, the fibers are not likely to be aligned in a specific direction, thus making it possible to give isotropy to the strength of the resin molded body, and to improve the strength.

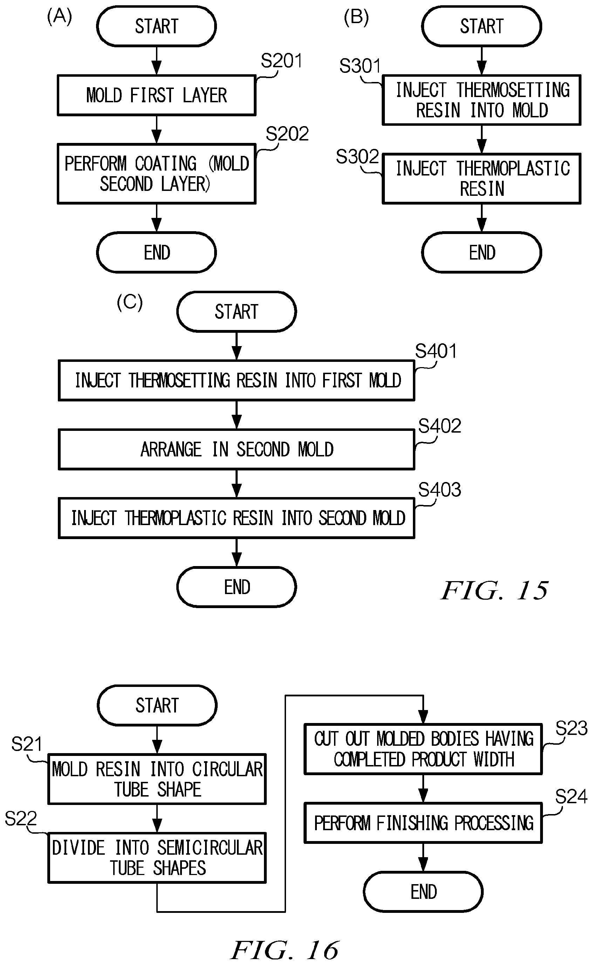

Also, in the case where the bearing has a laminated structure as shown in FIG. 8 described above, various methods can be employed for the molding of step S11. FIG. 15 is a flowchart showing a method of molding a bearing that has a laminated structure.

A bearing having a laminated structure may be molded by performing coating as shown in FIG. 15(A) for example. In step S201 in FIG. 15(A), a first layer is molded from a thermosetting resin material using injection molding, compression molding, sheet forming, or the like. Then, in step S202, a second layer is molded by coating the surface of the first layer with a thermoplastic resin.

Also, a bearing that has a laminated structure may be molded by injection molding multiple resin pieces at different times as shown in FIG. 15(B) for example. In step S301 in FIG. 15(B), thermosetting resin is injected into one portion of the interior space of a mold. Accordingly, a first layer that includes outer circumferential surface 113 is formed. Then, in step S302, thermoplastic resin is injected between the mold and the first layer. Accordingly, the thermoplastic resin fills a portion not occupied by the first layer in the interior space of the mold, and a second layer is formed. This second layer includes inner circumferential surface 112.

Also, a bearing having a laminated structure may be molded by so-called multicolor molding as shown in FIG. 15(C) for example. Multicolor molding is a method in which resin molded bodies are switched between multiple molds, a resin molded body is molded at a prior stage, and then another type of resin is injected between the resin molded body and a new mold to manufacture a molded body that is constituted by multiple types of resin layers.

In step S401 in FIG. 15(C), thermosetting resin is injected into a first mold. Accordingly, a first layer that includes outer circumferential surface 113 is formed. Then, in step S402, the above-described first layer is moved to and arranged in a second mold. The interior space of the second mold is designed to be larger than the interior space of the first mold. Furthermore, in step S403, thermoplastic resin is injected into the second mold. Accordingly, the thermoplastic resin fills a portion not occupied by the first layer in the interior space of the second mold, and a second layer is formed. This second layer includes inner circumferential surface 112.

This multicolor molding is applicable to compression molding as well. In this case, step S402 described above can be omitted.

For example, in step S401 of FIG. 15(C), a thermosetting resin powder or granules are introduced through an opening of a female mold, and then a first male mold is inserted into the opening of the female mold, and the resin is pressed. At this time, the resin may be pre-heated, and may have been subjected to degassing processing. Accordingly, the pressed thermosetting resin hardens inside the interior space of the female mold, and a first layer that includes outer circumferential surface 113 is formed. The first male mold constitutes a first mold along with the female mold.

The first male mold is removed, and then in step S403, a thermoplastic resin powder or granules are introduced through the opening of the above-described female mold. The introduced thermoplastic resin is arranged so as to be overlaid on the first layer in the interior space of the female mold. A second male mold is then inserted into the opening of the female mold, and the resin is pressed. Accordingly, the thermoplastic resin hardens in the space between the first layer and the second male mold, and a second layer is formed. This second layer includes inner circumferential surface 112. The second male mold constitutes a second mold along with the female mold.

Note that the second male mold may be different from or the same as the first male mold. Also, the order in which the thermosetting resin and the thermoplastic resin are introduced may be reversed. Moreover, the resin that is molded in the latter stage may be introduced before the resin molded in the earlier stage has completely hardened.

### 2-3. Third example

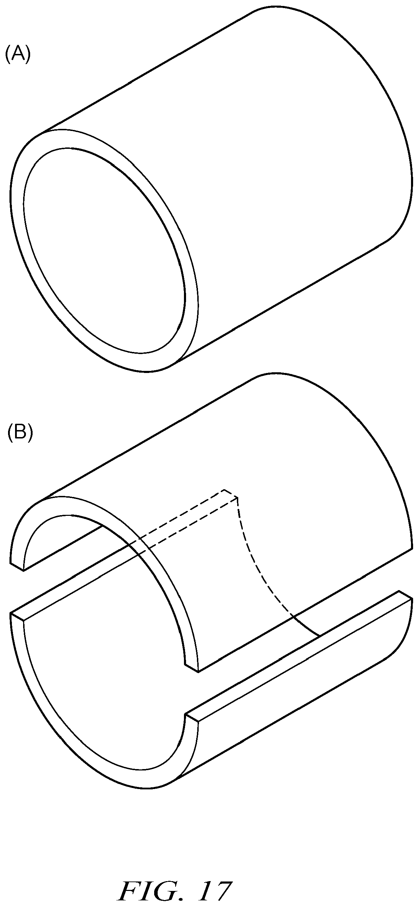

FIG. 16 is a flowchart showing a bearing manufacturing method according to a third example, and FIG. 17 is a diagram illustrating manufacturing steps.

In step S21, resin is molded into a circular tube shape. FIG. 17(A) illustrates a resin molded body that is obtained in step S21. The circular tube shape referred to here is a shape in which the length in the axial direction is longer than the width of the completed bearing. This molding is performed by injection molding, compression molding, or the like.

In step S22, the circular tube-shaped resin molded body is bisected by performing cutting in the axial direction. Two semicircular tube-shaped resin molded bodies are obtained. FIG. 17(B) illustrates resin molded bodies that are obtained in step S22. Thereafter, the step in which a molded body having the width of the completed bearing is cut from the semicircular tube-shaped resin molded body (step S23) and the finishing processing (step S24) are similar to steps S12 and S13.

Note that similarly to the second example described above, if resin is molded into a circular tube shape having the width of the completed bearing in step S21 in FIG. 16, step S23 shown in FIG. 16 may be omitted.

Also, the molding in step S21 of FIG. 16 may be performed by sheet forming, similarly to the second example.

Also, in the case where the bearing is to have a laminated structure, similarly to the second example, various methods can be applied to the molding in step S21 of FIG. 16, such as coating, injection molding at different times, and multicolor molding.

### 3. Variations

The present invention is not limited to the embodiment described above, and various modifications can be carried out. The following describes several variations. Two or more of the following variations may be used in combination.

The specific shape of the bearing is not limited to the shape illustrated in the embodiment. For example, at least one of the oil groove, the oil holes, the fine grooves, the oil relief, the crush relief, and the claw may be omitted. Alternatively, at least one of an oil groove and oil holes may be provided in semicircular tube-shaped bearing 12 and connecting rod bearing 20. Also, the specific sizes of these elements are not limited to the sizes illustrated in the embodiment. Moreover, the specific shapes, number of, and positions of the oil groove and the oil holes are not limited to those illustrated in the embodiment. Furthermore, the semicircular tube-shaped bearing is not required to have a bulge.

In the embodiment, an example is described in which oil groove 116 extends from mating surface 114 to mating surface 115. However, the oil groove may be formed in only a portion in the circumferential direction. Also, the oil groove is not limited to being formed in the sliding surface (inner circumferential surface), and may be formed in the outer circumferential surface. In other words, it is sufficient that the oil groove is formed in at least one of the inner circumferential surface and the outer circumferential surface of the bearing main body.

## Claims

1. An internal combustion engine bearing comprising:
a bearing main body that is formed from a resin, has a semicircular tube shape, and has an inner circumferential surface that is to slide over an opposing shaft and an outer circumferential surface that is to come into contact with a housing.

2. The internal combustion engine bearing according to claim 1, wherein the bearing main body includes a layer formed from a thermosetting resin.

3. The internal combustion engine bearing according to claim 1 or 2, wherein the bearing main body includes a layer formed from a thermoplastic resin.

4. The internal combustion engine bearing according to any one of claims 1 to 3, wherein the bearing main body includes a layer formed from a fiber reinforced resin.

5. The internal combustion engine bearing according to any one of claims 1 to 4, further comprising:
a first layer that is formed from a thermosetting resin and includes the outer circumferential surface; and
a second layer that is formed from a thermoplastic resin and includes the inner circumferential surface.

6. The internal combustion engine bearing according to claim 5, wherein
a thickness of the first layer is greater than or equal to 80% of a thickness of the bearing main body.

7. The internal combustion engine bearing according to claim 5 or 6, wherein
the bearing main body has an oil passage between the first layer and the second layer.

8. A method of manufacturing an internal combustion engine bearing, comprising:
producing a slurry by stirring a material that contains a resin in water;
dehydrating the produced slurry; and
molding the dehydrated slurry by applying pressure and heat in a mold.

9. A method of manufacturing an internal combustion engine bearing, comprising:
forming a first layer from a thermosetting resin; and
forming a second layer by coating the first layer with a thermoplastic resin.

10. A method of manufacturing an internal combustion engine bearing, comprising:
forming a first layer by injecting a thermosetting resin into a first mold;
arranging the formed first layer into a second mold; and
forming a second layer by injecting a thermoplastic resin into the second mold in which the first layer is arranged.

11. A method of manufacturing an internal combustion engine bearing, comprising:
forming a first layer by injecting a thermosetting resin into a portion of an interior space of a mold; and
forming a second layer by injecting a thermoplastic resin between the mold and the first layer.

12. A method of manufacturing an internal combustion engine bearing, comprising:
forming a first layer by using a first male mold to press a thermosetting resin powder or granules arranged in a female mold; and
forming a second layer by using a second male mold to press a thermoplastic resin powder or granules arranged so as to be overlaid on the first layer formed in the female mold.

## Amended claims

### Amended claims under Art. 19.1 PCT

1. (Cancelled)

2. (Cancelled)

3. (Cancelled)

4. (Cancelled)

5. (Amended) An internal combustion engine bearing comprising:
a bearing main body that is formed from a resin, has a semicircular tube shape, and has an inner circumferential surface that is to slide over an opposing shaft and an outer circumferential surface that is to come into contact with a housing, wherein
the bearing main body includes
a first layer that is formed from a thermosetting resin and includes the outer circumferential surface; and
a second layer that is formed from a thermoplastic resin and includes the inner circumferential surface.

6. The internal combustion engine bearing according to claim 5, wherein
a thickness of the first layer is greater than or equal to 80% of a thickness of the bearing main body.

7. The internal combustion engine bearing according to claim 5 or 6, wherein
the bearing main body has an oil passage between the first layer and the second layer.

8. A method of manufacturing an internal combustion engine bearing, comprising:
producing a slurry by stirring a material that contains a resin in water;
dehydrating the produced slurry; and
molding the dehydrated slurry by applying pressure and heat in a mold.

9. A method of manufacturing an internal combustion engine bearing, comprising:
forming a first layer from a thermosetting resin; and
forming a second layer by coating the first layer with a thermoplastic resin.

10. A method of manufacturing an internal combustion engine bearing, comprising:
forming a first layer by injecting a thermosetting resin into a first mold;
arranging the formed first layer into a second mold; and
forming a second layer by injecting a thermoplastic resin into the second mold in which the first layer is arranged.

11. A method of manufacturing an internal combustion engine bearing, comprising:
forming a first layer by injecting a thermosetting resin into a portion of an interior space of a mold; and
forming a second layer by injecting a thermoplastic resin between the mold and the first layer.

12. A method of manufacturing an internal combustion engine bearing, comprising:
forming a first layer by using a first male mold to press a thermosetting resin powder or granules arranged in a female mold; and
forming a second layer by using a second male mold to press a thermoplastic resin powder or granules arranged so as to be overlaid on the first layer formed in the female mold.
